# EUROPEAN PATENT SPECIFICATION

(11) **EP 1 486 127 B1**
(45) Date of publication and mention of the grant of the patent: **25.04.2007**
(21) Application number: 02769845.5
(22) Date of filing: 13.09.2002
(51) Int. Cl.: A23L 1/333, A23L 1/317, A23L 1/318, A23L 1/325

(54) **THE PROCESS FOR PURE AQUATIC HAM OR CHINESE HAM CONTAINING FISH**
VERFAHREN ZUR HERSTELLUNG VON REIN AQUATISCHEM SCHINKEN ODER CHINESISCHEM SCHINKEN FISCH ENTHALTEND
PROCEDE DE PRODUCTION DE JAMBON AQUATIQUE PUR OU JAMBON CHINOIS CONTENANT DU POISSON

(30) Priority: 14.08.2002 CN 02128810
(43) Date of publication of application: 15.12.2004
(73) Proprietor: Wang, Shan, Haidan District, Beijing 100036 (CN)
(72) Inventor: Wang, Shan, Haidan District, Beijing 100036 (CN)
(74) Representative: Leszczynski, André
(86) International application number: PCT/CN2002/000652
(87) International publication number: WO 2004/016114

(56) References cited:
- CN-A- 1 235 788
- CN-A- 1 298 667
- CN-A- 86 101 290
- FR-A- 2 058 545
- PATENT ABSTRACTS OF JAPAN vol. 1997, no. 10, 31 October 1997 (1997-10-31) & JP 09 168375 A (SAITO TADASHI), 30 June 1997 (1997-06-30)

## Description

### Field of the invention

The present invention relates to processing aquatic product, more particularly to a pure aquatic animal meat ham sausage or western style ham sausage with fish and its preparing method.

### Background of the invention

Aquatic animal meat has high nutritive value and delicate flavor, and people like eating it. Recently, it becomes gradually a fashion to eat more aquatic products and less animal and poultry meat. The conventional processing methods for aquatic products include curing, smoking, tinning etc, or transporting the refrigerated aquatic products to meet the needs of the people who live in the place no aquatic product there. Recently, the technology for preparing ham sausage or western style ham sausage with aquatic animal meat is developed greatly, which meets people's needs to some extent. But in the prior art, the ham sausage or western style ham sausage is prepared by mixing the starch and animal and poultry meat with hashed or mashed aquatic animal meat, then preparing the aquatic animal meat ham sausage or western style ham sausage by the conventional process. There exists defects of no distinct flavour of aquatic animal meat, dryness and acerbity in taste, bad elasticity and single taste, so people can not feel that there exists aquatic animal meat in the ham sausage or western style ham sausage made by the conventional method. In the meantime, the ham sausage or western style ham sausage contains more fat and cholesterol which results from the adding of some animal and poultry meat.

Document JP 09 168 375 discloses fish meat paste products comprising cephalopod meat.

### Summary of the invention

One object of the invention is to make use of the high binding ability of the cephalopod aquatic animal meat, to overcome the defects of the aquatic animal meat being shaped difficultly which results from its more moisture content and short fibres. The invention utilizes cephalopod aquatic animal meat instead of animal and poultry meat in the ham sausage or western style ham sausage in which fish meat mash used as raw material. The invention combines the aquatic product process with conventional meat process. The ham sausage or western style ham sausage with scientific formulation of the invention is prepared by the unique process. The present invention prepares a kind of tasteful and nutritive pure aquatic animal meat ham sausage or western style ham sausage with fish, which gets rid of the conventional preparing method by adding animal and poultry meat as binding agent. Furthermore, the invention can be used in large scale, and the sources of raw materials used in the invention are broad. The invention provides a new method for processing aquatic product.

Another object of the invention is to keep the original nutrition and flavor of aquatic in the ham sausage or western style ham sausage to maximum extent by using aquatic animal meat with a certain shape as raw material and steaming or cooking at low temperature, so that the ham sausage or western style ham sausage of the present invention is more delicious and better in taste than that prepared by the fish meat mash and animal and poultry meat. Thus the present invention provides a kind of true and tasteful aquatic animal meat ham sausage or western style ham sausage with fish and people can appreciate the existence of the aquatic animal meat.

To achieve the aforesaid purposes, the technical solutions of this invention are as follows:

The technical solution of the pure aquatic animal meat ham sausage or western style ham sausage with fish is as follows: selecting minced cephalopod aquatic animal meat as binding agent, mixing it with fish meat, the mixture is used as main material, and adding seasonings as subsidiary materials into the mixture, and then preparing pure aquatic animal meat ham sausage or western style ham sausage containing fish by conventional methods, wherein the cephalopod aquatic animal meat is 8-95% of the total weight, preferably 25-60%, more preferably 30-50%, of the total weight.

The cephalopod aquatic animals includes Todarodes pacificus, Sepia esculenta, Loligo japonica, Sepiella maindroni, Doryteuthis bleekeri, Sepioteuthis lessoniana, Octopus variabilis, Octopus ochellatus and Octopus vulgaris.

The processing method of cephalopod aquatic animal meat described above includes steps: selecting a certain amount of cephalopod aquatic animal meat to be rough processed, removing inedible portion, then cutting edible portion into block, strip, slice or particle with length of 2-100mm, width of 2-100mm and thickness of 2-40mm; then curing them with suitable amount of seasonings for 2-48 hours; the said seasonings used in curing process include soya sauce, spicery, ground spices, paprika powder, etc.

The preparing method for the aforesaid pure aquatic animal meat ham sausage or western style ham sausage with fish includes steps: mixing the processed cephalopod aquatic animal meat with fish meat, and adding subsidiary materials according to different tastes by conventional technology. The weight ratios of the subsidiary materials are: soya sauce 0-8, refined salt 0.5-5, sugar 1-10, soya protein or starch 0-8, carrageenan 1-5, spicery 0.01-5, thickener 0.01-5. Mixing the above raw materials uniformly and filling the mixture into simulation casing by vacuum filling machine, and sealing the two open ends by U-shaped or 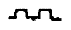 - shaped clips, and then steaming or boiling adequately and being sterilized in boiler or autoclave, finally cooling and drying to obtain the ham sausage or western style ham sausage according to this invention.

Aforesaid fish meat can be fish mash or fish block. Fish mash is processed by conventional method. The method for preparing fish block include steps: selecting a certain amount of fish to be rough processed, removing head, gut and scale of the fish, then salting the fish with suitable amount of salt or curing the fish with suitable amount of seasonings, drying the salted or cured fish by airing in shady and cool place for 24hr or by heating, steaming the dried fish for 15-30 minutes, removing fish bone and foreign materials after cooling, and then cutting the fish into block, strip or slice with length of 2-100mm, width of 2-100mm, and thickness of 2-40mm.

The fish block can also be processed by steps as follows: curing the fish with water, salt and spicery for 0.5 -12 hours, steaming or cooking and then removing inedible portion, cutting edible portion into block, strip or slice with length of 2-100mm, thickness of 2-40mm, and width of 2-100mm.

The fish block can be raw, ready-cooked, smoked and /or dried, and its shape can be block, strip or slice; its size can be 2-100mm in length, 2-40 mm in thickness and 2-100mm in width.

The advantages of the present invention include: remaining the original flavor and nutrition of the aquatic animal meat to maximum extent, being better in taste and having more nutrition than conventional aquatic animal meat ham sausage or western style ham sausage using fish meat mash and animal and poultry meat as raw material. The aquatic animal meat ham sausage or western style ham sausage of the invention is not only tasteful but also can be appreciated the existence of the aquatic animal meat. It is the true aquatic meat ham sausage or western style ham sausage, which fills the vacancy of the market.

The present invention overcomes the defect of aquatic animal meat being shaped difficultly which results from its short fibres and more moisture content. The present invention can be used in large scale, and the sources of the raw material used in the invention are broad. The invention provides a new method for processing aquatic product.

The present invention combines the advantages of good taste and high nutritive value the aquatic animal meat possessed with the advantages of easy to preserve and carry, convenience for eating and unique in taste the conventional ham sausage or western style ham sausage possessed to provide a kind of new convenience food. Furthermore, the present invention can provide different tastes which result from different formulations, so it can satisfy different demands of consumers. Meanwhile, the present invention can solve the problem that some consumers are not expert in cooking who like eating aquatic animal meat.

### Detailed description of the preferring embodiments

The present invention now will be further explained by the following examples.

### Example 1

Selecting processed hairtail meat 60kg and Todarodes pacificus (squid) 40kg, cutting into block having length of 2-100mm, adding salt 2.7kg, sugar 2kg, soya protein 6 kg, spicery 0.2 kg, cooking wine 1 kg, mixing them uniformly, filling the mixture into simulation casing by vacuum filling machine, and sealing the two open ends by U-shaped or 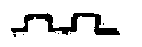 -shaped clips, and then steaming or boiling adequately and being sterilized in boiler or autoclave, finally cooling and drying to obtain the ham sausage or western style ham sausage according to this invention.

### Example 2

Selecting processed pomfret meat 70kg and Todarodes pacificus (squid) 30kg, cutting into block having length of 2-100mm, adding salt 2.7kg, sugar 2kg, soya protein 6 kg, spicery 0.2 kg, cooking wine 1 kg, mixing them uniformly, filling the mixture into simulation casing by vacuum filling machine, and sealing the two open ends by U-shaped or -shaped clips, and then steaming or boiling adequately and being sterilized in boiler or autoclave, finally cooling and drying to obtain the ham sausage or western style ham sausage according to this invention.

### Example 3

Selecting processed hairtail meat 92kg and cuttlefish 8 kg, cutting into block having length of 2-100mm, adding salt 2.7kg, sugar 2kg, soya protein 6 kg, spicery 0.2 kg, cooking wine 1 kg, mixing them uniformly, filling the mixture into simulation casing by vacuum filling machine, and sealing the two open ends by U-shaped or 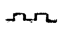 -shaped clips, and then steaming or boiling adequately and being sterilized in boiler or autoclave, finally cooling and drying to obtain the ham sausage or western style ham sausage according to this invention.

### Example 4

Selecting processed yellow croaker (yellow-tin tuna) meat 50kg, cutting into block having length of 1-90mm, and Octopus variabilis meat block 50 kg, adding soya sauce 4kg, salt 3.5kg, sugar 2.5kg, cooking wine 1.5kg, spicery 0.5 kg, mixing them uniformly, filling the mixture into simulation casing by vacuum filling machine, and sealing the two open ends by U-shaped or 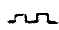 -shaped clips, and then steaming or boiling adequately and being sterilized in boiler or autoclave, finally cooling and drying to obtain the ham sausage or western style ham sausage according to this invention.

### Example 5

Selecting processed yellow croaker (yellow-tin tuna) meat 5kg, cutting into block having length of 1-90mm, and Todarodes pacificus (squid) meat block 95kg, adding soy sauce 4kg, salt 3.5kg, sugar 2.5kg, cooking wine 1.5 kg, spicery 0.5 kg, mixing them uniformly, filling the mixture into simulation casing by vacuum filling machine, and sealing the two open ends by U-shaped or 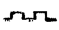 -shaped clips, and then steaming or boiling adequately and being sterilized in boiler or autoclave, finally cooling and drying to obtain the ham sausage or western style ham sausage according to this invention.

### Practical applicability

The present invention combines the advantages of good taste, high nutritive value the aquatic product possessed with the advantages of easy to preserve and carry, convenience for eating and unique in taste the conventional ham sausage or western style ham sausage possessed, and provides a kind of new convenience food. Furthermore, the product of the present invention is convenient for eating, and is helpful to people's health because of its high nutritive value.

## Claims

1. Pure aquatic animal meat sausage with fish, comprising minced cephalopod aquatic animal meat, fish and seasoning as subsidiary materials, **characterized in that** the minced cephalopod aquatic animal meat is in a quantity of 8-95% of the total weight, and the fish is in the form of blocks, strips or slices with a length of 2-100mm, a thickness of 2-40mm and a width of 2-100mm.

2. Pure aquatic animal meat sausage with fish according to claim 1, wherein the said fish is raw, ready-cooked, smoked and /or dried product.

3. Pure aquatic animal meat sausage with fish according to claim 2, wherein the said cephalopod aquatic animal meat is 25-60% of the total weight.

4. Pure aquatic animal meat sausage with fish according to claim 3, wherein the said cephalopod aquatic animal meat is 30-50% of the total weight.

5. Pure aquatic animal meat sausage with fish according to claim 4, wherein the said cephalopod aquatic animal includes Todarodes pacificus, Sepia esculenta, Loligo japonica, Sepiella maindroni, Doryteuthis bleekeri, Sepioteuthis lessoniana, Octopus variabilis, Octopus ochellatus, Octopus vulgaris, and mixtures thereof.

## Patentansprüche

1. Wurstware aus reinem Meerestierfleisch mit Fisch, die gehacktes Fleisch von aquatischen Kopffüßern. Fisch und Gewürze als Zusatzstoffe enthält, **dadurch gekennzeichnet, daß** das gehackte Fleisch von aquatischen Kopffüßern in einer Menge von 8 - 95% des Gesamtgewichts vorhanden ist und der Fisch die Form von Blöcken, Streifen oder Scheiben mit einer Länge von 2 - 100 mm, einer Dicke 2 - 40 mm und einer Breite von 2 - 100 mm hat.

2. Wurstware nach Anspruch 1, bei welcher der Fisch roh, gar gekocht, geräuchert und/oder getrocknet ist.

3. Wurstware nach Anspruch 2, bei der das Fleisch von aquatischen Kopffüßern 25 - 60% des Gesamtgewichts beträgt.

4. Wurstware nach Anspruch 3, bei der das Fleisch von aquatischen Kopffüßern 30 - 50% des Gesamtgewichts beträgt.

5. Wurstware nach Anspruch 4, bei der die aquatischen Kopffüßer Todarodes pacificus, Sepia esculenta, Loligo japonica, Sepiella maindroni, Doryteuthis bleekeri, Sepioteuthis lessoniana, Octopus variabilis, Octopus ochellatus, Octopus vulgaris, und Gemische hieraus umfassen.

## Revendications

1. Saucisse pure viande d'animal aquatique avec du poisson, comportant de la viande d'animal aquatique céphalopode hachée fine, du poisson et de l'assaisonnement en tant que matières subsidiaires, **caractérisée en ce que** la viande d'animal aquatique céphalopode hachée fine est en une quantité de 8 à 95 % du poids total, et le poisson a la forme de blocs, de bandes ou de tranches ayant une longueur de 2 à 100 mm, une épaisseur de 2 à 40 mm et une largeur de 2 à 100 mm.

2. Saucisse pure viande d'animal aquatique avec du poisson selon la revendication 1, dans laquelle ledit poisson est un produit cru, tout cuit, fumé et/ou séché.

3. Saucisse pure viande d'animal aquatique avec du poisson selon la revendication 2, dans laquelle ladite viande d'animal aquatique céphalopode est de 25 à 60 % du poids total.

4. Saucisse pure viande d'animal aquatique avec du poisson selon la revendication 3, dans lequel ladite viande d'animal aquatique céphalopode est de 30 à 50 % du poids total.

5. Saucisse pure viande d'animal aquatique avec du poisson selon la revendication 4, dans lequel ledit animal aquatique céphalopode inclut Todarodes pacificus, Sepia esculenta, Loligo japonica, Sepiella maindroni, Doryteuthis bleekeri, Sepiotheuthis lessoniana, Octopus variabilis, Octopus ochellatus, Octopus vulgaris, et des mélanges de ceux-ci.
